# EUROPEAN PATENT APPLICATION

(11) **EP 2 150 019 A1**
(43) Date of publication of application: **03.02.2010**
(21) Application number: 08290736.1
(22) Date of filing: 30.07.2008
(51) Int. Cl.: H04L 29/06, H04N 7/173

(54) **Internet protocol television server**

(71) Applicant: Alcatel Lucent, 75008 Paris (FR)
(72) Inventor: Kisel, Andrey, SL8 8DH, Berkshire (GB); Robinson, Dave Cecil, SN8 2NP, Wiltshire (GB); Schutte, Tiaan, 2252 BV Voorschoten (NL)
(74) Representative: Sarup, David Alexander

(57) **Abstract**

An internet protocol television, IPTV, server is provided. The server includes a database operative to store IPTV applications and IPTV data. The database is accessible by each of more than one user terminals to obtain at least one of an IPTV application and IPTV data. The database includes a stage configured to provide to multiple terminals access to the database using Remote Direct Memory Access, RDMA, protocol.

## Description

### Field of the Invention

The present invention relates to telecommunications, in particular to providing Internet Protocol television.

### Description of the Related Art

Known user terminals for Internet Protocol television (IPTV) are able to access and download new applications and other data that may be provided by, for example, the telecom system operator, some third party, or other users. The user terminal is able to access shared multimedia, for example, so as to be able to share and swap user-generated content. The user terminal is also able to access shared applications, whether provided by the system operator, a third party, or user-generated. The user terminal also accesses applications and multimedia that are provided by a community of users to members of that community. Upgrades and core IPTV applications are accessible by the user terminal. User terminals are often referred to as User Equipments, UEs.

In known systems, web servers, application servers and application-server-based applications, sometimes known as middleware, enable the IPTV user terminal to use various access technologies that depend on the type of application or service being accessed. For example, Hypertext Transfer Protocol/eXtensible Markup Language (HTTP/XML) is used for web applications, File Transfer Protocol (FTP) for downloading Java applications or upgrades, Real Time Streaming Protocol (RTSP) for streaming, and MPEG2 transport stream (M2T) for carrying applications within private data streams. Also, other access technologies may be used, such as Remote Desktop Protocol (RDP) and WebServices (WS).

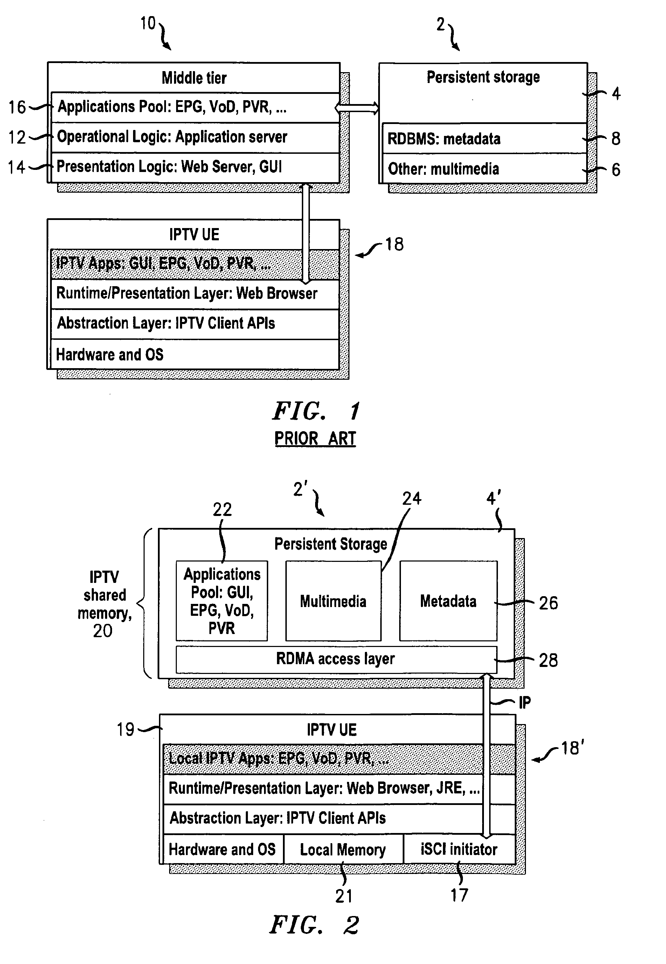

As shown in Figure 1, a known IPTV deployment is based upon a well-known three-tier architecture. The highest tier 2 is the persistent storage 4 in which the bulk of the multimedia resources 6 , such as digital movies, are stored. The persistant storage 4 includes a Remote DataBase Management System (RDBMS) 8.

The middle tier 10 contains server-based applications, for example, core IPTV applications, chat, content sharing, and games. The middle tier 10 also contains an application server, and/or web server, for user terminal access to the applications. For example, as shown in Figure 1, the middle tier 10 consists of an application server 12, a web server 14 and a graphic user interface (GUI), and a pool 16 of applications. The pool of applications includes, for example, an Electronic Program Guide (EPG), Video-on-Demand (VoD), and a Personal Video Recorder (PVR).

The lowest tier 18 is that provided by the user terminals (IPTV UE) themselves, one of which is shown in Figure 1. This includes hardware, an operating system (OS), IPTV client Application programming interfaces (APIs), a web browser, and local applications including, for example, an Electronic Program Guide (EPG), Video-on-Demand (VoD), and a Personal Video Recorder (PVR).

### Summary of the Invention

The reader is referred to the appended independent claims. Some preferred features are laid out in the dependent claims.

An example of the present invention is an internet protocol television, IPTV, server. The server comprises a database operative to store IPTV applications and IPTV data. The database is accessible by each of more than one user terminals. The database includes a stage configured to use Remote Direct Memory Access, RDMA, protocol to provide the access to the database.

As compared to the prior art approach, in preferred embodiments, not needing the middle tier of application servers and webservers both simplifies the IPTV system, and increases the efficiency of the IPTV system. Delays due to the middle tier of the prior art do not occur. Also as there is less equipment required, such a system becomes more practical to implement, even for relatively small numbers of users, for example in communities of IPTV sharing members.

Accordingly, in preferred embodiments as compared to the prior art, fast and efficient access is enabled to IPTV applications, multimedia, and metadata, without requiring application-server-level management by a middle tier. The middle tier of the prior art, that to date is typically provided and controlled by large web site data providers such as Akamai and YouTube, is effectively bypassed or removed. This allows telecom operators to offer remote direct memory access storage of IPTV applications, multimedia and metadata direct to IPTV user terminals.

### Brief Description of the Drawings

An embodiment of the present invention will now be described by way of example and with reference to the drawings, in which:
Figure 1 is a diagram illustrating a known IPTV system,
Figure 2 is a diagram illustrating an Internet Protocol Television (IPTV) system according to a first embodiment of the invention, and
Figure 3 is a diagram illustrating in more detail the IPTV system shown in Figure 2.

### Detailed Description

When considering a known system, the inventors realised that remote memory access methods used in the field of cluster-computing could be applied to an Internet Protocol television (IPTV) system.

Remote Direct Memory Access (RDMA) is known in the field of cluster-computing. RDMA allows data to move directly from the memory of one computer into that of another without involving either one's operating system. This permits high-throughput, low-latency networking. RDMA enables data transfer directly to or from memory, eliminating the need to copy data between memory and data buffers in an operating system. Such transfers require no work to be done by CPUs, caches, or context switches, and transfers continue in parallel with other system operations.

iSCSI is a known RDMA protocol for sharing files.

iSCSI is Internet SCSI where SCSI is Small Computer System Interface protocol. iSCSI is a protocol that allows clients (known as initiators in iSCSI terminology) to send commands to storage devices on remote servers. iSCSI is a popular storage area network protocol allowing organisations to consolidate storage into storage arrays whilst providing hosts such as databases and web servers with the illusion of locally-attached storage.

Security features are known in iSCSI, such as challenge-response protocol (CHAP) or IPsec for iSCSI.

### IPTV System involving Remote Direct Memory Access

As shown in Figure 2, an example two-tier IPTV system is shown consisting of an upper tier 2' and a lower tier 18'interconnected by an Internet Protocol connection IP.

The lower tier 18' consists of IPTV user terminals 19, one of which is shown for simplicity. Each IPTV user terminal includes hardware, an operating system (OS), IPTV client Application programming interfaces (APIs), a runtime/presentation layer including a web browser and Java Runtime Environment (JRE), and local applications including, for example, an Electronic Program Guide (EPG), Video-on-Demand (VoD), and a Personal Video Recorder (PVR). Each user terminal also includes an iSCSI initiator 17 and a local memory 21.

The upper tier 2' is a persistent storage 4' consisting of an IPTV shared memory 20 shared by the user terminals 19 and made up of an applications memory area 22 (a pool of applications), multimedia memory area 24, and metadata memory area 26. The applications in the applications memory area 22 are such as graphic user interface (GUI), Electronic Program Guide (EPG), Video-on-Demand (VoD), and a Personal Video Recorder (PVR).

Importantly, the shared memory 20 includes a Remote Direct Memory Access (RDMA) access layer 28. In use, the user terminals 19 access the applications, multimedia and metadata memory areas 22,24,26 (for example for IPTV applications or shared data) using Remote Direct Memory Access via the RDMA access layer 28.

For example, during initial startup, a user terminal 19 copies the core IPTV application from the applications memory area 22 into its local memory 21. As RDMA is involved, there is high throughput and low latency. Being a simple copying operation, this is done at a high data rate and causes little delay. At a later time, the user terminal can either use the version of the application that it has saved locally, or reload a newer version of the core IPTV application directly from the applications memory area 22 of the shared memory 20.

As another example, the user terminal 19 accesses the results of remote applications that are stored in the shared memory 20.

As another example, the user terminal 19 shares the results of applications that it executes by placing those results in the shared memory 20. For example, multimedia content is pre-processed in the shared memory 20 for trick-play operations such as Fast Forward and Rewind. The pre-processed trick play content is then kept in the multimedia shared memory area 24 for access by other IPTV user terminals.

### iSCSI for RDMA

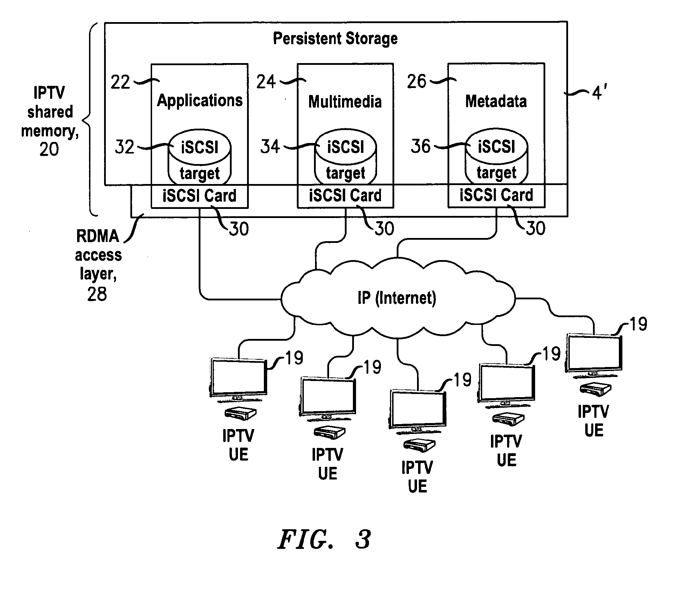

Figure 3 shows in more detail the system that is shown in Figure 2. As shown in Figure 3, the RDMA access layer 28 consists of iSCSI stages ("cards") 30. As mentioned previously, iSCSI is an RDMA protocol for sharing files.

In the IPTV shared memory 20, the applications memory area 22, multimedia memory area 24 and metadata memory area 26 each include a respective iSCSI target 32,34,36.

In use, the IPTV user terminals 19 act as iSCSI clients that request, from the relevant iSCSI targets32,34,36, remote direct memory access to the corresponding memory areas, specifically applications memory area 22, multimedia memory area 24, and metadata memory area 36. Each target provides access to one or multiple relevant locations in the memory 20 via standard internet using iSCSI as a layer over a standard Internet Protocol suite (TCP/IP - Transmission Control Protocol/Internet Protocol) in a hierarchical protocol stack.

In an example system, the iSCSI targets 32,34,36 may be collocated with other network equipment (not shown) such as a router, Digital Subscriber Line Access Multiplier (DSLAM), or Intelligent Subscriber Access Multiplier (ISAM). For example, the whole middleware for a community IPTV solution, described in more detail below, can consist of an intelligent DSLAM including iSCSI cards and software. Collocating the iSCSI targets 32,34,36 with such other network equipment (not shown) allows systems, even large ones, to be readily provided.

Security features available in iSCSI, such as challenge-response protocol (CHAP) or IPsec for iSCSI are available for use in this IPTV system.

### Community IPTV

Remote direct memory access provides a fast and efficient way for the user terminal to update or replace existing applications or data. The shared memory 20 enables easy swapping and sharing of not only multimedia and metadata, but also customised and user-extended IPTV applications. For example, a community can have access to the shared IPTV memory 22 and be authorised to extend initially-provided IPTV applications (such as core Video on Demand, VoD). Examples of use in community groups are explained below.

### Content-sharing

The user terminal has an application for sharing user-generated content. This application provides the user terminal with access to the shared multimedia memory area 24. New content, such as user-generated content is copied to that memory area 24 so as to be available to other users.

As an example, the IPTV user terminal copies to its memory 21 a main Java IPTV application, such as an open source Java IPTV application, from the applications memory area 22 of the shared memory 20. This is done by appropriate addressing of the relevant iSCSI target 32, for example by specifying an iSCSI location, such as "iqn.2007-04.com.alcatel-lucent:iptv.core.main. app".

The application is stored in the user terminal. The application allows the user to provide content that she/he has originated in the user terminal to members of a community group, for example, members of a "sport" community group. This is done by the Java application copying the content to the multimedia memory area 24 of the IPTV shared memory 20 and the user granting view- and read-permissions to the members of the "sport" community group. In this example, a known challenge-response protocol (CHAP secret) is used in accessing the content, so as to restrict that content to the community group members. Accordingly, all the members of the group may then see, copy, or play the content that is in the multimedia memory area 24.

### Community Applications

Considering the above-described system being used for community IPTV, a user uses his user terminal to create, and upload to the applications memory area 22, a customised or user-extended application. The user grants read- and execute- access to members within the community group who are concerned with developments in this application. These members test the application, after which access is granted to the rest of the community group. In this way, community development of IPTV applications is enabled.

### Variants

In the example described above, iSCSI is used to share access to persistent storage 4' in the upper tier 2' of the IPTV system..

In a basically similar alternative example, the iSCSI initiators in the user terminals include iSER functionality, and the RDMA access layer includes iSER functionality, as explained below. iSER, which stands for iSCSI Extensions for RDMA, is a known way to map iSCSI protocol over a network that provides RDMA. iSER permits data to be transmitted directly between memory buffers without intermediate copies of the data being made.

iSER allows sharing of application execution results between IPTV user terminals by simpl memory copy operations. For example, a shared application running in the IPTV shared memory generates pre-processed trick-play content and places that content into the multimedia shared memory area. The pre-processed trick-play content is then accessible by other IPTV terminals.

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. An internet protocol television, IPTV, server comprising a database operative to store IPTV applications and IPTV data,
the database being accessible by each of a plurality of user terminals to obtain at least one of an IPTV application and IPTV data,
the database including a stage configured to use Remote Direct Memory Access, RDMA, protocol to provide the access to the database.

2. An internet protocol television, IPTV, server according to claim 1, in which the RDMA protocol is Internet SCSI, iSCSI, where SCSI is Small Computer System Interface protocol.

3. An internet protocol television, IPTV, server according to claim 2, in which the iSCSI includes iSCSI Extensions for RDMA, iSER.

4. An internet protocol television, IPTV, server according toany preceding claim, in which the stage includes at least one iSCSI card.

5. An internet protocol television, IPTV, server according to any preceding claim, in which the database includes a memory area for IPTV applications, a memory area for IPTV multimedia, and a memory area for metadata.

6. An internet protocol television, IPTV, server according to claim 5, in which each of the memory areas includes an iSCSI target.

7. An internet protocol television, IPTV, server according to claim 5 or claim 6, in which the memory area for applications stores one or more of an Electronic Program Guide, a Personal Video Recorder, a Video-on-Demand stage, and a Graphic User Interface.

8. An internet protocol television, IPTV, server according to any preceding claim, in which the server is configured to receive, and store in the memory area for IPTV multimedia, user-generated or user-modified multimedia content.

9. An internet protocol television, IPTV, server according to claim 8, in which that content is security-controlled so as to be accessible by just a subset of other user terminals.

10. An internet protocol television, IPTV, server according to any preceding claim, in which the server is configured to receive, and store in the memory area for IPTV applications, a user-generated or user-modified application.

11. An internet protocol television, IPTV, server according to claim 10, in which that user-generated or user-modified application is security-controlled so as to be accessible by just a subset of other user terminals.

12. A method of providing an internet protocol television, IPTV, service to a user terminal comprising the steps of:
providing a database operative to store IPTV applications and IPTV data,
using Remote Direct Memory Access protocol to access the database to obtain for the user terminal at least one of an IPTV application and IPTV data.

13. A method of providing an internet protocol television, IPTV, service according to claim 12, in which the database comprises an RDMA stage by which the database is accessed, the RDMA stage operating in accordance with RDMA protocol.

14. A method of providing an internet protocol television, IPTV, service according to claim 13, in which, in use, the stage operates in accordance with Internet SCSI, iSCSI, where SCSI is Small Computer System Interface protocol.

## Amended claims

### Amended claims in accordance with Rule 137(2) EPC.

**1.** A server (2',18') comprising a database (2',4') operative to store information,
the database being accessible to obtain information,
the database including a stage (28) configured to use Remote Direct Memory Access, RDMA, protocol to provide the access to the database, **characterised in that** the server is an internet protocol television, IPTV, server and the database is accessible by each of a plurality of user terminals, and the information is at least one of an IPTV application and IPTV data.

**2.** An internet protocol television, IPTV, server according to claim 1, in which the RDMA protocol is Internet SCSI, iSCSI, where SCSI is Small Computer System Interface protocol.

**3.** An internet protocol television, IPTV, server according to claim 2, in which the iSCSI includes iSCSI Extensions for RDMA, iSER.

**4.** An internet protocol television, IPTV, server according to any preceding claim, in which the stage (20) includes at least one iSCSI card (30).

**5.** An internet protocol television, IPTV, server according to any preceding claim, in which the database includes a memory area (22) for IPTV applications, a memory area (24) for IPTV multimedia, and a memory area (26) for metadata.

**6.** An internet protocol television, IPTV, server according to claim 5, in which each of the memory areas includes an iSCSI target (32,34,36).

**7.** An internet protocol television, IPTV, server according to claim or claim 6, in which the memory area for applications stores one or more of an Electronic Program Guide, a Personal Video Recorder, a Video-on-Demand stage, and a Graphic User Interface.

**8.** An internet protocol television, IPTV, server according to any preceding claim, in which the server is configured to receive, and store in the memory area for IPTV multimedia, user-generated or user-modified multimedia content.

**9.** An internet protocol television, IPTV, server according to claim 8, in which that content is security-controlled so as to be accessible by just a subset of other user terminals.

**10.** An internet protocol television, IPTV, server according to any preceding claim, in which the server is configured to receive, and store in the memory area for IPTV applications, a user-generated or user-modified application.

**11.** An internet protocol television, IPTV, server according to claim 10, in which that user-generated or user-modified application is security-controlled so as to be accessible by just a subset of other user terminals.

**12.** A method of providing a television service to a user terminal comprising the steps of:
providing a database (2',4') operative to store information,
using Remote Direct Memory Access protocol (28) to access the database to obtain information, **characterised in that** the television service is an IPTV service,
the information is IPTV applications and IPTV data, and
RDMA is used to access the database to obtain for the user terminal at least one of an IPTV application and IPTV data.

**13.** A method of providing an internet protocol television, IPTV, service according to claim 12, in which the database comprises an RDMA stage (28) by which the database is accessed, the RDMA stage operating in accordance with RDMA protocol.

**14.** A method of providing an internet protocol television, IPTV, service according to claim 13, in which, in use, the stage (28) operates in accordance with Internet SCSI, iSCSI, where SCSI is Small Computer System Interface protocol.
